(19) **Europäisches Patentamt / European Patent Office / Office européen des brevets**

(11) **EP 4 516 120 A1**

(12) **EUROPEAN PATENT APPLICATION**
published in accordance with Art. 153(4) EPC

(43) Date of publication:
**05.03.2025 Bulletin 2025/10**

(21) Application number: **23796415.0**

(22) Date of filing: **26.04.2023**

(51) International Patent Classification (IPC):
**A23P 30/00** (2016.01)  **A23L 3/26** (2006.01)

(52) Cooperative Patent Classification (CPC):
**A23B 2/50; A23P 30/00**

(86) International application number:
**PCT/JP2023/016401**

(87) International publication number:
**WO 2023/210675 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 US 202263335358 P**
**04.08.2022 JP 2022124993**

(71) Applicant: **Panasonic Intellectual Property Management Co., Ltd.**
**Kadoma-shi, Osaka 571-0057 (JP)**

(72) Inventors:
• **YAMAJI, Satoru**
  **Kadoma-shi, Osaka 571-0057 (JP)**
• **INO, Daisuke**
  **Kadoma-shi, Osaka 571-0057 (JP)**
• **HASHIMOTO, Yasuhiro**
  **Kadoma-shi, Osaka 571-0057 (JP)**
• **UKAI, Kunihiro**
  **Kadoma-shi, Osaka 571-0057 (JP)**

(74) Representative: **Novagraaf International SA**
**Chemin de l'Echo 3**
**1213 Onex, Geneva (CH)**

(54) **FOOD PROCESSING APPARATUS AND LIGHT SOURCE WITH CATALYST**

(57)    A food processing apparatus (1a) includes: a container (10) that includes a space (15) for accommodating a food item (F); a catalyst film (20) that includes an activation surface (21a) in contact with the space (15); and a light source (30) that is disposed closer to a principal surface (22a) of the catalyst film (20) than to the activation surface (21a) in a thickness direction of the catalyst film (20), and emits ultraviolet light toward the catalyst film (20). The principal surface (22a) is on an opposite side of the catalyst film (20) with respect to the activation surface (21a). The catalyst film (20) includes a surface layer (21) including the activation surface (21a) and an absorption layer (22) including the principal surface (22a). The absorption layer (22) contains an ultraviolet-light absorbing particle (22b) that absorbs a portion of the ultraviolet light.

FIG. 1

EP 4 516 120 A1

**Description**

[Technical Field]

The present disclosure relates to a food processing apparatus and a light source with a catalyst which is used in the food processing apparatus.

[Background Art]

It is conventionally known that photocatalysts are used for processing food items. For example, Patent Literature (PTL) 1 discloses a method of producing a brew using a photocatalyst. When microorganisms in the brew are sterilized using this production method, excitation light is emitted onto a photocatalyst supported on a surface of a predetermined component such as an agitation component, while the brew in a vessel is agitated by the agitation component under an ambient temperature. PTL 1 discloses a microbial sterilization apparatus used for producing Japanese rice wine which is one example of the method of producing a brew. In the microbial sterilization apparatus, a light source of the excitation light is provided outside the vessel. In addition, an anatase-type titanium oxide coating is formed on the surface of an agitation blade.

[Citation List]

[Patent Literature]

[PTL 1] Japanese Unexamined Patent Application Publication No. 2003-250514

[Summary of Invention]

[Technical Problem]

The present disclosure provides a food processing apparatus, etc., which are advantageous in terms of increasing a reaction rate while inhibiting an alteration in the quality of a food item when light is used to process the food item.

[Solution to Problem]

A food processing apparatus according to one aspect of the present disclosure includes: a container that includes a space for accommodating a food item; a catalyst film that includes an activation surface in contact with the space; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film includes a surface layer including the activation surface and an absorption layer including the principal surface. The absorption layer contains an ultraviolet-light absorbing particle that absorbs a portion of the ultraviolet light.

In addition, a light source with a catalyst according to one aspect of the present disclosure includes: a catalyst film that includes an activation surface; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film includes a surface layer including the activation surface and an absorption layer including the principal surface. The absorption layer contains an ultraviolet-light absorbing particle that absorbs a portion of the ultraviolet light.

[Advantageous Effects of Invention]

A food processing apparatus, etc., according to the present disclosure are advantageous in terms of increasing a reaction rate while inhibiting an alteration in the quality of a food item.

[Brief Description of Drawings]

[FIG. 1]

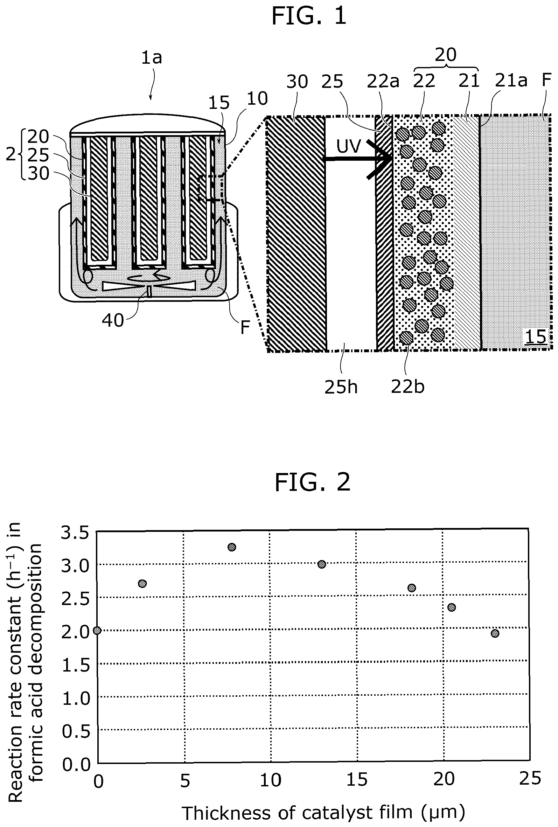

FIG. 1 is a schematic cross-sectional view of a food processing apparatus according to an embodiment.
[FIG. 2]
FIG. 2 is a graph showing the dependence of a reaction rate constant in formic acid decomposition and the thickness of a catalyst film.
[FIG. 3]

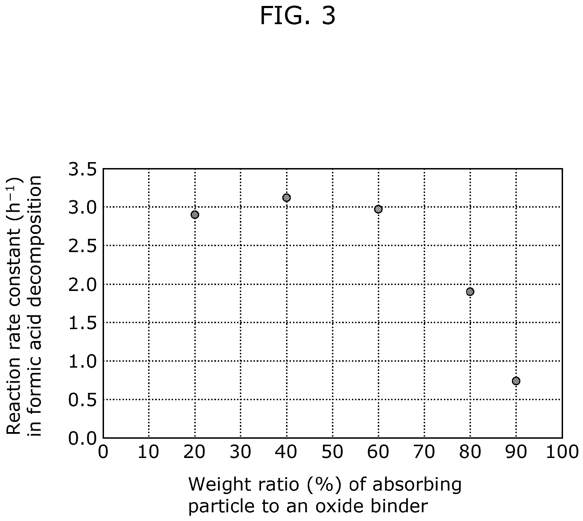

FIG. 3 is a graph illustrating the dependence of a reaction rate constant in the formic acid decomposition and a mixture amount of ultraviolet-light absorbing particles.

[Description of Embodiment]

(Underlying Knowledge Forming Basis of the Present Disclosure)

When photocatalysts are used to process food items, excitation light may be emitted onto a photocatalyst provided inside a container containing a food item from outside the container.

However, the inventors have found, through the study, transmission of excitation light including ultraviolet light through the food item contained in the container before the excitation light transmits through the photocatalyst may cause degradation of or an alteration in the quality of a constituent of the food item due to the ultraviolet light, which should be avoided in the first place. As a result of conducting in-depth study, the inventors have newly found that it is advantageous to cause ultraviolet light emitted from a light source to enter a catalyst film from a principal surface on an opposite side of a catalyst film with respect to an activation surface of the catalyst film, in terms of inhibiting degradation of or an alteration in the quality of a constituent of a food item. The inventors have further conducted the study and newly found that a photocatalyst satisfying a predetermined condition can increase the reaction rate of a reaction for processing a food item. Based on these new findings, the inventors have completed a food processing apparatus of the present disclosure.

(Outline of the Present Disclosure)

The outline of the present disclosure is as follows.

A food processing apparatus according to Aspect 1 of the present disclosure includes: a container that includes a space for accommodating a food item; a catalyst film that includes an activation surface in contact with the space; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film includes a surface layer including the activation surface and an absorption layer including the principal surface. The absorption layer contains an ultraviolet-light absorbing particle that absorbs a portion of the ultraviolet light.

According to the above-described food processing apparatus, an ultraviolet-light absorbing particle contained in the absorption layer can reduce, out of the total amount of ultraviolet light emitted from the light source, an amount of the ultraviolet light reaching the activation surface. As a result, it is possible to reduce a possibility of an occurrence of an alteration in the quality of a constituent of a food item at the activation surface, which should be avoided in the first place. Meanwhile, the remaining amount of ultraviolet light not absorbed is used for initiating a target catalytic reaction at the activation surface, etc. Therefore, the food processing apparatus is advantageous in terms of increasing a reaction rate while inhibiting an alteration in the quality of a food item.

In addition, a food processing apparatus according to Aspect 2 of the present disclosure is the food processing apparatus according to Aspect 1, where absorptance of the ultraviolet light by the catalyst film is at least 50%.

According to the above, the catalyst film can absorb, out of the total amount of the ultraviolet light, at least 50% of the ultraviolet light so as to prevent the at least 50% of the ultraviolet light from reaching the activation surface.

Moreover, a food processing apparatus according to Aspect 3 of the present disclosure is the food processing apparatus according to Aspect 1 or 2, where the absorption layer includes an oxide binder.

According to the above, the inclusion of an oxide binder can maintain the absorption layer so as to prevent the absorption layer from collapsing. Accordingly, the absorption layer can stably absorb ultraviolet light.

In addition, a food processing apparatus according to Aspect 4 of the present disclosure is the food processing apparatus according to Aspect 3, where the oxide binder has a composition of $Si_mO_n$, $Ti_mO_n$, or $Al_mO_n$, where m is 1 or 2 and n is 2 or 3.

According to the above, the inclusion of an oxide binder having the composition of $Si_mO_n$, $Ti_mO_n$, or $Al_mO_n$ (where m is 1 or 2 and n is 2 or 3) can maintain the absorption layer so as to prevent the absorption layer from collapsing. Accordingly, the absorption layer can stably absorb ultraviolet light.

Moreover, a food processing apparatus according to Aspect 5 of the present disclosure is the food processing apparatus according to any one of Aspects 1 to 4, where the surface layer includes a metal oxide.

According to the above, the activation surface can be formed on the surface layer including a metal oxide.

In addition, a food processing apparatus according to Aspect 6 of the present disclosure is the food processing apparatus according to Aspect 5, where the metal oxide has a composition of $Ti_mO_n$, where m is 1 or 2 and n is 2 or 3.

According to the above, the activation surface can be formed on the surface layer including a metal oxide having the composition of $Ti_mO_n$ (where m is 1 or 2 and n is 2 or 3).

Moreover, a food processing apparatus according to Aspect 7 of the present disclosure is the food processing apparatus according to any one of Aspects 1 to 6, which further includes a support member that is in contact with the catalyst film at the principal surface, and supports the catalyst film.

According to the above, the support member can be in contact with the catalyst film at the principal surface. Stated differently, the principal surface contacting the support member enables the shape of the catalyst film to conform to the shape of the support member. When the support member includes a material having rigidity, the catalyst film can be constantly maintained in the shape that conforms to the shape of the support member.

In addition, a food processing apparatus according to Aspect 8 of the present disclosure is the food processing apparatus according to Aspect 7, where the support member includes a hollow inside, and is in contact with the catalyst film at an outside of the support member, and the light source is disposed in the hollow.

According to the above, a light source can be disposed in the hollow included in the support member, and ultraviolet light can be emitted from inside the hollow toward the catalyst film via the support member.

Moreover, a food processing apparatus according to Aspect 9 of the present disclosure is the food processing apparatus according to Aspect 8, where the support member includes glass.

According to the above, a light source can be disposed in the hollow included in the support member including glass, and ultraviolet light can be emitted from inside the hollow toward the catalyst film via the support member.

In addition, a food processing apparatus according to Aspect 10 of the present disclosure is the food processing apparatus according to any one of Aspects 1 to 9, where the thickness of the catalyst film is at least 2.6 $\mu$m and at most 18.2 $\mu$m.

According to the above, while the catalyst film having the thickness of at least 2.6 $\mu$m to at most 18.2 $\mu$m reducing an amount of ultraviolet light reaching the activation surface, the remaining amount of the ultraviolet light can be used for initiating a target catalytic reaction at the activation surface, etc. Therefore, the food processing apparatus is advantageous in terms of increasing a reaction rate while inhibiting an alteration in the quality of a food item.

Moreover, a light source with a catalyst according to Aspect 11 of the present disclosure includes: a catalyst film that includes an activation surface; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film includes a surface layer including the activation surface and an absorption layer including the principal surface. The absorption layer contains an ultraviolet-light absorbing particle that absorbs a portion of the ultraviolet light.

According to the above, the light source with a catalyst can produce the same advantageous effects as the food processing apparatus according to Aspect 12.

In addition, a food processing apparatus according to Aspect 12 of the present disclosure includes: a container that includes a space for accommodating a food item; a catalyst film that includes an activation surface in contact with the space; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film absorbs a portion of the ultraviolet light. Absorptance of the ultraviolet light by the catalyst film is at least 50%. The thickness of the catalyst film is at least 2.6 $\mu$m and at most 18.2 $\mu$m.

According to the above-described food processing apparatus, the catalyst film having the thickness of at least 2.6 $\mu$m and at most 18.2 $\mu$m absorbs, out of the total amount of ultraviolet light emitted from the light source, at least 50% of the ultraviolet light so as to prevent the at least 50% of the ultraviolet light from reaching the activation surface. With this, while the amount of the ultraviolet light reaching the activation surface is reduced, the remaining amount of the ultraviolet light can be used for initiating a target catalytic reaction at the activation surface, etc. Therefore, the food processing apparatus is advantageous in terms of increasing a reaction rate while inhibiting an alteration in the quality of a food item.

Moreover, a food processing apparatus according to Aspect 13 of the present disclosure is the food processing apparatus according to Aspect 12, where the catalyst film includes a surface layer including the activation surface and an absorption layer including the principal surface, and the absorption layer contains an ultraviolet-light absorbing particle that absorbs a portion of the ultraviolet light.

According to the above, an ultraviolet-light absorbing particle contained in the absorption layer can reduce, out of the total amount of ultraviolet light emitted from the light source, an amount of the ultraviolet light reaching the activation surface.

In addition, a food processing apparatus according to Aspect 14 of the present disclosure is the food processing apparatus according to Aspect 13, where the absorption layer includes an oxide binder.

According to the above, the inclusion of an oxide binder can maintain the absorption layer so as to prevent the absorption layer from collapsing. Accordingly, the absorption layer can stably absorb ultraviolet light.

Moreover, a food processing apparatus according to Aspect 15 of the present disclosure is the food processing apparatus according to Aspect 14, where the oxide binder has a composition of $Si_mO_n$, $Ti_mO_n$, or $Al_mO_n$, where m is 1 or 2 and n is 2 or 3.

According to the above, the inclusion of an oxide binder having the composition of $Si_mO_n$, $Ti_mO_n$, or $Al_mO_n$ (where m is 1 or 2 and n is 2 or 3) can maintain the absorption layer so as to prevent the absorption layer from collapsing. Accordingly, the absorption layer can stably absorb ultraviolet light.

In addition, a food processing apparatus according to Aspect 16 of the present disclosure is the food processing device according to any one of Aspects 13 to 15, where the surface layer includes a metal oxide.

According to the above, the activation surface can be formed on the surface layer including a metal oxide.

Moreover, a food processing apparatus according to Aspect 17 of the present disclosure is the food processing apparatus according to Aspect 16, where the metal oxide has a composition of $Ti_mO_n$, where m is 1 or 2 and n is 2 or 3.

According to the above, the activation surface can be formed on the surface layer including a metal oxide having the composition of $Ti_mO_n$ (where m is 1 or 2 and n is 2 or 3).

In addition, a food processing apparatus according to Aspect 18 of the present disclosure is the food processing device according to any one of Aspects 12 to 17, which further includes a support member that is in contact with the catalyst film at the principal surface, and supports the catalyst film.

According to the above, the support member can be in contact with the catalyst film at the principal surface. Stated differently, the principal surface contacting the support member enables the shape of the catalyst film to conform to the shape of the support member. When the support member includes a material having rigidity, the catalyst film can be constantly maintained in the shape that conforms to the shape of the support member.

Moreover, a food processing apparatus according to Aspect 19 of the present disclosure is the food processing apparatus according to Aspect 18, where the support member includes a hollow inside, and is in contact with the catalyst film at an outside of the support member, and the light source is disposed in the hollow.

According to the above, a light source can be disposed in the hollow included in the support member so that ultraviolet light can be emitted from inside the hollow toward the catalyst film via the support member.

In addition, a food processing apparatus according to Aspect 20 is the food processing apparatus according to Aspect 18 or 19, where the support member includes glass.

According to the above, a light source can be disposed in the hollow included in the support member including glass so that ultraviolet light can be emitted from inside the hollow toward the catalyst film via the support member.

Moreover, a light source with a catalyst according to Aspect 21 of the present disclosure includes: a catalyst film that includes an activation surface in contact with the space; and a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface. The catalyst film absorbs a portion of the ultraviolet light. Absorptance of the ultraviolet light by the catalyst film is at least 50%. The thickness of the catalyst film is at least 2.6 $\mu$m and at most 18.2 $\mu$m.

According to the above, the light source with a catalyst can produce the same advantageous effects as the food processing apparatus according to Aspect 12.

Note that these comprehensive or concrete aspects of the present disclosure may be implemented by a system, method, device, integrated circuit, computer program, or recording medium such as a computer-readable CD-ROM, and may also be implemented by optionally combining systems, methods, devices, integrated circuits, computer programs, and recording media.

(Embodiment of the Present Disclosure)

Hereinafter, an embodiment according to the present disclosure will be described with reference to the drawings. Note that the embodiment described below shows a general or specific example. The numerical values, shapes, materials, elements, the arrangement and connection of the elements, process conditions, steps, order of the steps, etc. indicated in the following embodiment are mere examples, and therefore are not intended to limit the scope of the present disclosure. Furthermore, among the elements in the embodiment below, those not recited in any one of the independent claims representing the most generic concepts will be described as optional elements. Note that the drawings are schematic diagrams, and do not necessarily provide strictly accurate illustrations. Throughout the drawings, the same reference sign is given to the same element, and redundant description is omitted or simplified.

In the present disclosure, terms defining relationships between elements, such as parallel and perpendicular, terms defining element shapes, such as quadrilateral, and numerical values do not only represent strict meanings, but also represent meanings in a range substantially equivalent (e.g., a difference of about a few percentages) to the strict meanings.

[Embodiment]

FIG. 1 is a schematic cross-sectional view of a food processing apparatus according to an embodiment. FIG. 1 also shows an enlarged view of a portion (the portion enclosed by a dotted-and-dashed line) of the cross-section. Food processing apparatus 1a includes container 10 and light source with catalyst 2. In food processing apparatus 1a, a plurality of (e.g., three) light sources with catalysts 2 are provided for a single container 10. Note that food processing apparatus 1a may have a configuration in which only a single light source with catalyst 2 is provided for a single container 10. Container 10 includes space 15 for accommodating food item F. Food item F may be a food raw material. The food raw material is processed into a food item through processes performed by food processing apparatus 1a or through other processes.

Each light source with catalyst 2 includes light source 30, catalyst film 20 that produces catalysis, and support member 25 for supporting catalyst film 20. Note that when light source 30 includes a rigid material that can be used as a replacement for support member 25, a light source with a catalyst including light source 30 and catalyst film 20 can be implemented, without including support member 25.

Catalyst film 20 includes activation surface 21a that is in contact with space 15. In a thickness direction of catalyst film 20, light source 30 is disposed closer to principal surface 22a of catalyst film 20 than to activation surface 21a. Principal surface 22a is on an opposite side of catalyst film 20 with respect to activation surface 21a. As described above, catalyst film 20 is a sheet-like member including activation surface 21a and principal surface 22a which are back to back to each other.

As shown in the enlarged view of the cross section, catalyst film 20 mainly absorbs ultraviolet light, and has a two-layer structure including absorption layer 22 that does not produce catalysis and surface layer 21 that serves as the core for producing catalysis. Absorption layer 22 is disposed on the principal surface 22a side in the thickness direction of catalyst film 20. Surface layer 21 is disposed on the activation surface 21a side in the thickness direction of catalyst film 20. Note that catalyst film 20 is not limited to the above-described two-layer structure. Catalyst film 20 may have a structure of three or more layers including a different layer, such as a diffusion layer, on principal surface 22a. In this structure, a principal surface of the different layer is the exposed surface of catalyst film 20. Accordingly, principal surface 22a of absorption layer 20 is not exposed, serving as the interface between absorption layer 22 and the different layer.

In order to implement absorption of ultraviolet light, absorption layer 22 includes ultraviolet-light absorbing particles 22b diffused and stabilized in an oxide binder. Ultraviolet-light absorbing particles 22b are to be, for example, particles having a property of absorbing ultraviolet light, such as $TiO_2$. Particularly, since the wavelength of ultraviolet light to be absorbed (stated differently, the wavelength of ultraviolet light not to be reaching food item F) is determined depending on food item F to be processed, ultraviolet-light absorbing particles 22b selected in accordance with food item F are to be used. As the oxide binder, a substance having the composition of $SiO_2$, $TiO_2$, $Al_2O_3$, or the like may be selected to be used.

Surface layer 21 is formed including, as a catalyst, a metal oxide such as $TiO_2$. The metal oxide is to be a substance whose catalytic activity is stimulated by ultraviolet light. Particularly, since necessary catalytic activity is determined depending on food item F to be processed, a metal oxide selected in accordance with food item F is to be used. The structure of catalyst film 20 will be described later in further detail.

Light source 30 emits, toward catalyst film 20, ultraviolet light indicated by an arrow marked with "UV" in the diagram. More specifically, light source 30 is disposed on the principal surface 22a side, and emits ultraviolet light from the principal surface 22a side toward catalyst film 20 via support member 25. Catalyst film 20 is configured to absorb a portion of ultraviolet light. The absorptance of ultraviolet light by catalyst film 20, namely the ratio of ultraviolet light that has entered catalyst film 20 to ultraviolet light that has exited from catalyst film 20 to be emitted onto food item F is at least 50%.

To put it differently, catalyst film 20 absorbs a large amount (50% at the maximum) of ultraviolet light that has entered catalyst film 20 through principal surface 22a. The absorption of ultraviolet light by catalyst film 20 generates a large number of excitons in catalyst film 20. For example, an interaction between catalyst film 20 and ultraviolet light generates, as pairs of electrons and holes, excitons in a wide area of catalyst film 20. These excitons have limited life of from several nanoseconds to several tens of nanoseconds, and are diffused in catalyst film 20 within the period of their limited life. For example, the exciton concentration in catalyst film 20 exponentially decreases from principal surface 22a to activation surface 21a. With this diffusion due to the above-described concentration gradient, most of the excitons reach the interface between activation surface 21a and food item F that is in contact with activation surface 21a. Those excitons that have reached the interface initiate charge transfer reactions between catalyst film 20 and oxygen molecules, water molecules, and reactants included in food item F, and active species are generated. As a result of the above, a photochemical reaction necessary to process food item F selectively proceeds. Accordingly, when selecting substances to be included in a metal oxide, ultraviolet-light absorbing particles 22b, and oxide binders of surface layer 21 and absorption layer 22, effective generation and effective diffusion of excitons should also be the points to be considered. Note that when charges of the excitons generated by an interaction between catalyst film 20 and ultraviolet light are separated, these excitons may serve as carriers such as electrons and holes.

A food item including a food raw material is sensitive to ultraviolet light emission. Emission of ultraviolet light onto a food item causes degradation of or an alteration in the quality of the food item. This may result in the food item to give off, for example, a putrid smell, an unpleasant smell, and an artificial smell which are different from the original flavor that the food item has. The three main factors of a food item are flavor, taste, and mouthfeel. Above all, flavor is especially an important factor. For this reason, such an unpleasant smell given off by a food item may become a factor that greatly reduces the value of the food item. However, food processing apparatus 1a includes catalyst film 20 that absorbs a large amount of ultraviolet light before the ultraviolet light reaches food item F. Accordingly, food item F is not readily irradiated with a high-intensity ultraviolet light. The absorptance of ultraviolet light by catalyst film 20 can be changed in accordance with the wavelength of ultraviolet light emitted from light source 30. For this reason, various types of light sources can be used as light source 30. As has been described above, food processing apparatus 1a can inhibit degradation of or an alteration in the quality of a food item due to ultraviolet light, and enables a target reaction for processing a food item to predominantly proceeds.

Among various chemical reactions involving organic matters included in a food item, there is a photochemical reaction in which light plays an important role. A photocatalytic reaction is also a photochemical reaction that takes place as a result of an interaction between a solid catalyst or the like and light. In order to distinguish a photocatalytic reaction that takes place as a result of an interaction between a solid catalyst and light from a photochemical reaction that takes place as a result of a direct interaction between organic molecules and light, the latter reaction will be called an "organic photochemical reaction" in this embodiment.

In order for an organic photochemical reaction to take place, light absorption by reacting molecules is necessary. The light absorption is caused by a functional group or a molecular framework that makes up a molecule. Among various organic molecules, chemical compounds having a carbon-oxygen double bond, such as benzenes, pyridines, thiophenes, furans, and a carbonyl group, absorb light in the wavelength range of from 250 nm to 450 nm. These chemical compounds may be included in aroma compounds that cause interactions with the human sense of smell. Since food items each are a composition of a wide variety of high and low molecules, it is extremely difficult to track each of organic photochemical reactions taken place in the above-described chemical compounds at a molecular level. However, when a sensory evaluation using human sense of smell is performed to examine a food item in which organic photochemical reactions have taken place, it is possible to examine whether an unpleasant smell different from the original food smell is given off or not.

Processing of food item F using food processing apparatus 1a may be processing performed to change a constituent of food item F into a different constituent. Food processing apparatus 1a may be used for brewing or ageing, or may be used for food product manufacturing and food processing other than brewing or ageing.

For example, the thickness of catalyst film 20 is adjusted such that the absorptance of ultraviolet light by catalyst film 20 is at least 50%. Furthermore, adjustment to the thickness of catalyst film 20 can create catalyst film 20 having the absorptance of ultraviolet light greater than 50%. The thickness of catalyst film 20 can be determined based on an interference pattern that appears in a transmission spectrum of catalyst film 20, for example.

The absorptance of ultraviolet light by catalyst film 20 can be obtained using the following method, for example. First, an emission spectrum of light source 30 is obtained to identify wavelength range $\Delta\lambda$ that corresponds to the full width at half maximum of the maximum light intensity in the emission spectrum. Then, a spectrophotometer is used to measure an absorption spectrum of catalyst film 20. Next, integrated value $I_I$ of the light intensity in the emission spectrum in wavelength range $\Delta\lambda$ is obtained. Based on the absorption spectrum of catalyst film 20, integrated value $I_A$ of the light intensity of light to be absorbed by catalyst film 20 in the wavelength range is obtained. Thereafter, absorptance A is determined based on integrated value $I_I$ and integrated value $I_A$ using Equation (1) shown below.

$$\text{Absorptance A (\%)} = 100 \times I_A / I_I \quad \text{Equation (1)}$$

The absorptance of ultraviolet light by catalyst film 20 may be at least 55%, may be at least 60%, or may be at least 70%. The absorptance of ultraviolet light by catalyst film 20 may be 100%, may be at most 98%, or may be at most 95%.

With regard to light absorption by a substance, the Lambert law shown below as Equation (2) has been known.

$$\log (I_0 / I) = \alpha d \quad \text{Equation (2)}$$

In Equation (2), $I_0$ denotes the intensity of incident light when the light propagates through a substance, I denotes the intensity of transmitted light, $\alpha$ denotes an absorption coefficient specific to the substance, and d denotes the thickness of the substance. An absorption coefficient $\alpha$ relates to the response characteristic of a substance to ultraviolet light, and is a function of a wavelength. In catalyst film 20, an absorption coefficient $\alpha$ tends to increase with a decrease in the wavelength of light.

When the interaction between ultraviolet light and catalyst film 20 is strong and the absorption coefficient $\alpha$ of a substance included in catalyst film 20 is large, the intensity of ultraviolet light incident on catalyst film 20 greatly attenuates at a stage at which the ultraviolet light propagates partially through catalyst film 20. For this reason, propagation of the ultraviolet light that has entered through an entrance surface of catalyst film 20 up to a principal surface that is on an opposite side of catalyst film 20 with respect to the entrance surface is difficult. Conversely, when the interaction between ultraviolet light and catalyst film 20 is weak and the absorption coefficient α of a substance included in catalyst film 20 is small, the ultraviolet light incident on catalyst film 20 propagates from the entrance surface of catalyst film 20 up to the principal surface that is on the opposite side of catalyst film 20 with respect the entrance surface. The intensity of the ultraviolet light barely attenuates, and the ultraviolet light leaks outside catalyst film 20. Catalyst film 20 has, for example, the absorption coefficient α [cm$^{-1}$] within a predetermined range with respect to a wavelength λ of ultraviolet light. For example, the absorption coefficient α at a wavelength λ is as follows: 1971.8 cm$^{-1}$ when a wavelength λ is 365 nm, 7347.3 cm$^{-1}$ when a wavelength λ is 350 nm, and 18039.7 cm$^{-1}$ when a wavelength λ is 330 nm. Stated differently, the absorption coefficient α falls within the range of from 1971.8 cm$^{-1}$ to 18039.7 cm$^{-1}$, for example. With this, the attenuation of the intensity of ultraviolet light in catalyst film 20 is readily adjusted to a desired degree.

The wavelength of ultraviolet light emitted from light source 30 is not limited to a particular value, and falls within the range of from 320 nm to 375 nm, for example. With this, ultraviolet light is appropriately absorbed by catalyst film 20.

Absorptance A of ultraviolet light by catalyst film 20 can also be defined as Equation (3) shown below.

```
Absorptance A (%) = (1 - exp (β × the amount of
absorbing materials + absorbance of the surface layer)) × 100
Equation (3)
```

In Equation (3), β denotes an absorption coefficient that is the eigenvalue of ultraviolet-light absorbing particle 22b, the amount of absorbing materials indicates a weight of ultraviolet-light absorbing particles 22b per unit area, and a thickness indicates a thickness of the absorption layer.

Light source 30 is not limited to a particular light source, and may be, for example, a fluorescent light-type light source including a high-pressure mercury lamp, a low-pressure mercury lamp, and a fluorescent agent, or light-emitting diode (LED). Light source 30 is, for example, a monochromatic light source. In this case, the thickness of catalyst film 20 is readily adjusted since the wavelength range of ultraviolet light is narrow.

The thickness of catalyst film 20 typically has the upper and lower limits. It is because the emission spectrum of light source 30 is not expressed by a delta function, but has a limited spectral bandwidth, and an ultraviolet light absorption spectrum that is an optical response characteristic of catalyst film 20 to ultraviolet light is a continuous function.

Catalyst film 20 includes multiple layers as described above. As illustrated in FIG. 1, catalyst film 20 includes, for example, surface layer 21 and absorption layer 22. Surface layer 21 includes activation surface 21a. Absorption layer 22 includes principal surface 22a. Absorption layer 22 plays a role in absorbing ultraviolet light to generate excitons and in causing the generated excitons to transfer (diffuse) toward activation surface 21a. Surface layer 21 plays a role in initiating charge transfer reactions at the interface between activation surface 21a and food item F.

Absorption layer 22 is capable of functioning as an absorption medium of ultraviolet light. The number of charge transfer reactions that take place at the interface between activation surface 21a and food item F is never greater than the number of photons absorbed by catalyst film 20. For this reason, ultraviolet light incident on catalyst film 20 is to be sufficiently absorbed inside absorption layer 22 in order to increase the reaction rate of a reaction for processing a food item, for example. For example, the thickness of absorption layer 22 is adjusted such that the thickness of catalyst film 20 is at least F (λ). Absorption layer 22 is capable of functioning as a conduction medium of excitons. Excitons generated inside absorption layer 22 are diffused inside absorption layer 22 within their limited life T (second) of several nanoseconds to several tens of nanoseconds, and reach the interface between activation surface 21a and food item F. The excitons that could not reach the interface are deactivated due to recombination of excited electrons and holes. In this case, light energy used for generating the excitons is converted into thermal energy without initiating chemical reactions, and is wasted. For this reason, the thickness of absorption layer 22 is adjusted such that the thickness of catalyst film 20 is at most G (λ). Accordingly, the thickness of catalyst film 20 is at least F (λ) and at most G (λ).

When the diffusion rate of an exciton in catalyst film 20 is denoted as v [μm/sec], the maximum diffused distance of the exciton can be approximated to τ × v (μm). τ reflects excited-state dynamics of the exciton, and is affected by factors, such as an electron state and defect density of a material. In addition, a crystal phase of catalyst film 20 may also affect τ. Adjusting materials to be included in absorption layer 22 in light of the above-described points can even more certainly increase the reaction rate of a reaction necessary to process food item F using food processing apparatus 1a.

Surface layer 21 includes activation surface 21a, and triggers a catalytic reaction. An elementary process of a catalytic reaction is a chemical reaction that takes place on the surface of a solid. For this reason, performance as a catalyst tends to be determined by a microstructure of activation surface 21a, not by a structure as the bulk. Activation surface 21a has, for example, a predetermined microstructure, such as a textured surface. With this, the surface area of activation surface 21a tends to be large. This leads to a sufficient increase in the substance transfer rate of transferring, to activation surface 21a, a constituent of food item F which is to be reacted to a catalytic reaction, and thus the reaction rate of a reaction necessary to process food item F can be even more certainly increased.

Both the thickness of surface layer 21 and the thickness of absorption layer 22 are not limited to particular values as long as the absorptance of ultraviolet light by catalyst film 20 is at least 50%. The thickness of absorption layer 22 is greater than, for example, the thickness of surface layer 21. With this, absorption layer 22 can smoothly absorb ultraviolet light. The thickness of surface layer 21 may fall within the range of from several nm to several tens of $\mu$m, for example.

For example, FIG. 2 is a graph showing the dependence of a reaction rate constant in formic acid decomposition and the thickness of a catalyst film. In FIG. 2, the horizontal axis represents the thickness of catalyst film 20, totaling the thickness of surface layer 21 and the thickness of absorption layer 22, and the vertical axis represents, as one example of catalytic reactions, the reaction rate constant obtained when formic acid decomposition is catalyzed. As illustrated in FIG. 2, the thickness of catalyst film 20 that satisfies the reaction rate constant of 2.5 ($h^{-1}$) at which a catalytic reaction is considered to be effectively proceeding falls within the range of from 2.6 $\mu$m to 18.2 $\mu$m. When the thickness of catalyst film 20 is less than 2.6 $\mu$m, absorption layer 22 cannot sufficiently absorb ultraviolet light, and thus the reaction rate constant has a low value. Conversely, when the thickness of catalyst film 20 is greater than 18.2 $\mu$m, excitons generated due to absorption of ultraviolet light do not sufficiently reach activation surface 21a, and thus the reaction rate constant has a low value. As described above, the thickness of catalyst film 20 may be at least 2.6 $\mu$m and at most 18.2 $\mu$m.

The thickness of catalyst film 20 can be adjusted by the number of times a material of catalyst film 20 is applied on the surface (the surface in contact with principal surface 22a) of support member 25. When the thickness of surface layer 21 is several nm, surface layer 21 may be formed to have a single layer, for example. When the thickness of surface layer 21 is several tens of nm, surface layer 21 may be formed to have multiple layers, for example. Both the thickness of surface layer 21 and the thickness of absorption layer 22 may be determined based on, for example, an electron microscopic image of a cross-section of catalyst film 20. In this case, both the thickness of surface layer 21 and the thickness of absorption layer 22 can be determined as the arithmetic mean of thicknesses of at least 10 randomly selected locations. In addition, the thickness of catalyst film 20 can also be determined using a step gauge. In this case, the thickness of catalyst film 20 can be determined as the mean value of measurements carried out several times.

Catalyst film 20 includes, for example, a metal oxide. With this, catalyst film 20 smoothly absorbs ultraviolet light, and thus the reaction rate of a reaction for processing food item F can be even more certainly increased.

A metal oxide included in catalyst film 20 is not limited to a particular metal oxide, and may be, for example, a titanium oxide, a zinc oxide, a silicon oxide, an aluminum oxide, or a zeolite. Note that a "metal oxide" in the present description includes an oxide including silicon.

A metal oxide included in catalyst film 20 may have a composition of $Ti_mO_n$. This composition satisfies conditions of $1 \leq m \leq 2$ and $2 \leq n \leq 3$. In this case, the reaction rate of a reaction for processing food item F can be even more certainly increased.

In catalyst film 20, a material included in surface layer 21 and a material included in absorption layer 22 may be of the same type or may be of different types. For example, when a material included in surface layer 21 and a material included in absorption layer 22 are different in catalyst film 20, the function of absorption layer 22 is even more readily increased while the function of surface layer 21 is even more increased.

Absorption layer 22 may include ultraviolet-light absorbing particle 22b. Ultraviolet-light absorbing particle 22b is not limited to a particular material. For example, ultraviolet-light absorbing particle 22b may include a titanium oxide, a zinc oxide, a silicon oxide, an aluminum oxide, a zeolite, or an organic pigment. For example, a $TiO_2$ particle is used. A mixture amount of ultraviolet-light absorbing particles 22b is, for example, at most 60% by weight with respect to the whole absorption layer. FIG. 3 is a graph illustrating the dependence of a reaction rate constant in the formic acid decomposition and a mixture amount of ultraviolet-light absorbing particles. In FIG. 3, the horizontal axis represents the weight ratio of ultraviolet-light absorbing particles 22b to an oxide binder which corresponds to a mixture amount of ultraviolet-light absorbing particles 22b, and the vertical axis represents, as one example of catalytic reactions, the reaction rate constant obtained when formic acid decomposition is catalyzed at the thickness of 13 $\mu$m of catalyst film 20. As illustrated in FIG. 3, the weight ratio of ultraviolet-light absorbing particles 22b to the oxide binder which satisfies the reaction rate constant of 2.5 ($h^{-1}$) at which a catalytic reaction is considered to be effectively proceeding falls within the range of from 20% to 60%.

As $TiO_2$ particles, the product name P25 of NIPPON AEROSIL CO., LTD. whose primary particle size is 21 nm can be used, for example. Absorption layer 22 may include a binder. The binder is not limited to a particular material, and may include an oxide binder, such as a titanium oxide, a zinc oxide, a silicon oxide, an aluminum oxide, a zeolite, or an organic polymer.

As illustrated in FIG. 1, food processing apparatus 1a further includes, for example, support member 25. Support member 25 includes hollow 25h inside, and light source 30 is disposed in hollow 25h. An outside of support member 25 has an outer surface, and support member 25 is in contact with principal surface 22a at the outer surface. Consequently, support member 25 is disposed closer to principal surface 22a than to activation surface 21a in the thickness direction of catalyst film 20, and supports catalyst film 20. With this, catalyst film 20 is securely present in food processing apparatus 1a.

A material included in support member 25 is not limited to a particular material, and is, for example, glass. Support member 25 typically has a weak optical response characteristic to ultraviolet light, and has high transmittance for ultraviolet light. Silica glass and borosilicate glass exemplify a material included in support member 25.

The shape of support member 25 is not limited to a particular shape as long as support member 25 can support catalyst film 20. For example, support member 25 need not include hollow 25h. Support member 25 is, for example, tubular. Support member 25 may be in the shape of a hollow sphere or may be in the shape of a hollow polyhedron.

As illustrated in FIG. 1, food processing apparatus 1a may further include stirrer 40. Stirrer 40 includes, for example, a rotating shaft and a stirring impeller attached to the rotating shaft. This enables food item F to be rapidly transported to activation surface 21a of catalyst film 20 to increase the reaction rate of a reaction for processing food item F, and thus is advantageous in terms of increasing the reaction rate. As mass transfer, there are diffusion transfer caused by a concentration gradient and convection transfer in which mass transfers with a flow developed between regions. The operation of stirrer 40 increases the substance transfer rate of transferring substances in food item F. The operation of stirrer 40 readily retain a high concentration of constituents of food item F which are to be reacted to a catalytic reaction at the interface between catalyst film 20 and food item F. In addition, the operation of stirrer 40 can facilitate development of a flow between regions in food item F in space 15 of container 10. The rotating shaft of stirrer 40 can be inserted from above or below container 10.

(Example)

The food processing apparatus according to the present disclosure will be described in more detail in the example. Note that the food processing apparatus according to the present disclosure is not limited to the example shown below.

<Evaluation Performed to Determine Whether Unpleasant Smell Is Given Off>

Using a spin coating process, sol A was applied on a support plate (corresponding to support member 25) made of silica glass in food processing apparatus 1a to form a coating. Sol A was made by stirring, for 30 minutes, 4.53 mL of tetraethoxysilane, 24 mL of 1 mol/L hydrochloric acid, and 5 g of a metal oxide ($TiO_2$ powder).

This coating was sintered at 500°C inside an electric furnace for three hours. An absorption layer was formed by repeating, five times, the coating forming and coating sintering. Using a spin coating process, sol B was applied on the absorption layer to form a coating. Sol B was made by stirring, for three hours, 0.092 mol (21 g) of titanium ethoxide, 14.6 $cm^3$ of 20% by weight of hydrochloric acid, 6 g of pluronic P123 (surfactant), and 74 $cm^3$ of 1-Butanol. This coating was sintered at 500°C inside the electric furnace for three hours to form a surface layer. Through the above-described processes, sample J was made. Note that the support plate was formed in the shape of a square of 30 mm square in plan view.

Besides not forming a layer corresponding to absorption layer 22 included in sample J, sample K was made in the same manner as sample J.

A support plate was used as is as sample L, without forming a coating on the support plate.

A yeast water solution was introduced instead of food item F, and catalytic reactions were caused to take place in all of samples J, K, and L. Sensory evaluations were performed in accordance with a two-alternative discrimination testing method by three evaluators to determine whether an unpleasant smell is given off by the liquid samples after the reactions were taken place. As a result of using sample J, the three evaluators concluded that they did not detect an unpleasant smell from the liquid sample after the reaction was taken place. In contrast to the above, when samples K and L were used, all of the three evaluators concluded that they detected an unpleasant smell from the liquid samples after the reactions were taken place. As described above, no degradation occurred in a constituent of the yeast water solution due to ultraviolet light when sample J was used, but the occurrence of degradation in constituents of the yeast water solutions due to ultraviolet light was suggested when samples K and L were used.

Hereinbefore, the food processing apparatus, etc. according to the present disclosure have been described based on the embodiment, but the present disclosure is not limited to the embodiment. The scope of the present disclosure may encompass embodiments as a result of making, to the embodiment, various modifications that may be conceived by those skilled in the art, and different embodiments achieved by combining some elements in the embodiment, as long as the resultant embodiments do not depart from the scope of the present disclosure.

[Industrial Applicability]

The food processing apparatus according to the present disclosure is useful in processing various food items including food raw materials.

[Reference Signs List]

| | |
|---|---|
| 1a | food processing apparatus |
| 2 | light source with catalyst |
| 10 | container |
| 15 | space |
| 20 | catalyst film |
| 21 | surface layer |
| 21a | activation surface |
| 22 | absorption layer |
| 22a | principal surface |
| 22b | ultraviolet-light absorbing particle |
| 25 | support member |
| 25h | hollow |
| 30 | light source |
| 40 | stirrer |
| F | food item |

**Claims**

1. A food processing apparatus comprising:

   a container that includes a space for accommodating a food item;
   a catalyst film that includes an activation surface in contact with the space; and
   a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface, wherein
   the catalyst film includes a surface layer including the activation surface and an absorption layer including the principal surface, and
   the absorption layer contains an ultraviolet-light absorbing particle that absorbs a portion of the ultraviolet light.

2. The food processing apparatus according to claim 1, wherein
   absorptance of the ultraviolet light by the catalyst film is at least 50%.

3. The food processing apparatus according to claim 1, wherein
   the absorption layer includes an oxide binder.

4. The food processing apparatus according to claim 3, wherein
   the oxide binder has a composition of $Si_mO_n$, $Ti_mO_n$, or $Al_mO_n$, where m is 1 or 2 and n is 2 or 3.

5. The food processing apparatus according to claim 1, wherein
   the surface layer includes a metal oxide.

6. The food processing apparatus according to claim 5, wherein
   the metal oxide has a composition of $Ti_mO_n$, where m is 1 or 2 and n is 2 or 3.

7. The food processing apparatus according to claim 1, further comprising:
   a support member that is in contact with the catalyst film at the principal surface, and supports the catalyst film.

8. The food processing apparatus according to claim 7, wherein

   the support member includes a hollow inside, and is in contact with the catalyst film at an outside of the support member, and
   the light source is disposed in the hollow.

9. The food processing apparatus according to claim 8, wherein

the support member includes glass.

10. The food processing apparatus according to any one of claims 1 to 9, wherein
the thickness of the catalyst film is at least 2.6 $\mu$m and at most 18.2 $\mu$m.

11. A light source with a catalyst comprising:

a catalyst film that includes an activation surface; and
a light source that is disposed closer to a principal surface of the catalyst film than to the activation surface in a thickness direction of the catalyst film, and emits ultraviolet light toward the catalyst film, the principal surface being on an opposite side of the catalyst film with respect to the activation surface, wherein
the catalyst film includes a surface layer including the activation surface and an absorption layer including the principal surface, and
the absorption layer contains an ultraviolet-light absorbing particle that absorbs a portion of the ultraviolet light.

## FIG. 1

## FIG. 2

# FIG. 3

## INTERNATIONAL SEARCH REPORT

International application No.

**PCT/JP2023/016401**

### A. CLASSIFICATION OF SUBJECT MATTER

*A23P 30/00*(2016.01)i; *A23L 3/26*(2006.01)i

FI: A23P30/00; A23L3/26

According to International Patent Classification (IPC) or to both national classification and IPC

### B. FIELDS SEARCHED

Minimum documentation searched (classification system followed by classification symbols)

A23P30/00; A23L3/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2003-250514 A (NIPPON TECHNO K.K.) 09 September 2003 (2003-09-09) paragraphs [0037]-[0039], [0049]-[0052], fig. 1 | 1-10 |
| Y | JP 2000-37615 A (MITSUBISHI ELECTRIC CORP.) 08 February 2000 (2000-02-08) paragraphs [0016], [0018], [0039], fig. 2 | 1-10 |
| Y | JP 2003-117405 A (NORITAKE CO., LTD.) 22 April 2003 (2003-04-22) paragraphs [0014], [0015], [0060]-[0067], fig. 5 | 1-10 |
| Y | JP 8-173512 A (SHARP CORP.) 09 July 1996 (1996-07-09) paragraphs [0013], [0021], [0022], fig. 1-3 | 1-10 |
| X | JP 10-233110 A (MATSUSHITA ELECTRIC INDUSTRIAL CO., LTD.) 02 September 1998 (1998-09-02) paragraphs [0049]-[0051], fig. 9 | 11 |
| Y | | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/016401**

**C.     DOCUMENTS CONSIDERED TO BE RELEVANT**

| Category* | Citation of document, with indication, where appropriate, of the relevant passages | Relevant to claim No. |
|---|---|---|
| X | JP 2004-209359 A (TOSHIBA LIGHTING & TECHNOLOGY CORP.) 29 July 2004 (2004-07-29)<br>        paragraphs [0033]-[0035], [0042], [0043], fig. 1-4 | 11 |
| Y |  | 1-10 |
| P, A | WO 2022/097662 A1 (PANASONIC INTELLECTUAL PROPERTY MANAGEMENT CO., LTD.) 12 May 2022 (2022-05-12) | 1-11 |

Form PCT/ISA/210 (second sheet) (January 2015)

INTERNATIONAL SEARCH REPORT
Information on patent family members

International application No.

**PCT/JP2023/016401**

| Patent document cited in search report | | | Publication date (day/month/year) | Patent family member(s) | Publication date (day/month/year) |
|---|---|---|---|---|---|
| JP | 2003-250514 | A | 09 September 2003 | (Family: none) | |
| JP | 2000-37615 | A | 08 February 2000 | (Family: none) | |
| JP | 2003-117405 | A | 22 April 2003 | US 2004/0248075 A1 paragraphs [0114]-[0116], fig. 6 WO 2003/033143 A1 EP 1435263 A1 CA 2463422 A KR 10-2004-0050912 A | |
| JP | 8-173512 | A | 09 July 1996 | (Family: none) | |
| JP | 10-233110 | A | 02 September 1998 | (Family: none) | |
| JP | 2004-209359 | A | 29 July 2004 | (Family: none) | |
| WO | 2022/097662 | A1 | 12 May 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250514 A